# EUROPEAN PATENT SPECIFICATION

(11) **EP 1 484 215 B1**
(45) Date of publication and mention of the grant of the patent: **21.03.2007**
(21) Application number: 03466020.9
(22) Date of filing: 17.12.2003
(51) Int. Cl.: B60N 2/48

(54) **Headrest**
Kopfstütze
Appui-tête

(30) Priority: 05.06.2003 CZ 1431403
(43) Date of publication of application: 08.12.2004
(73) Proprietor: Tanex, Plasty a.s., 551 01 Jaromer (CZ)
(72) Inventor: Rozkosny, Lubos, 517 21 Tyniste nad Orlici (CZ)
(74) Representative: Holasova, Hana

(56) References cited:
- DE-A- 3 339 362
- DE-A- 10 149 455
- FR-A- 1 471 309
- FR-A- 2 753 662
- FR-A- 2 806 678
- GB-A- 2 240 920

## Description

### Technical field

The technical solution concerns the headrest, mainly for car seats.

### The contemporary state of art

The hitherto known solutions of the headrest position locking in the course of the headrest swinging may be generally divided into two groups. The first one includes locking of the headrest using a clamp joint, when the connection of the headrest core and the reinforcement is secured via a clamping sleeve fixed to the plastic core. The sleeve is set to the horizontal bar of the headrest metal reinforcement and it applies clamping pressure on external surface of the horizontal bar. The headrest position is adjustable by overcoming the resistance of the clamping joint. The limit positions are secured by backstops in both end positions.

The second solution of the headrest locking is the mechanical securing of the position. The headrest position locking is performed via a latch, controlled by a push button located on the headrest side. The latch fits in the cuts in the reinforcement or cuts created in the swinging mechanism of the backrest. In this way, the headrest position is fixed and secured and it can be re-adjusted only after the push button unlocking. In this way it is possible to set the headrest tilt as well as the height adjustment of the headrest position.

But the headrest height setting is usually solved using the reinforcement locking in the reinforcement guides located on the top of the seat backrest.

The above stated types of headrests are demanding from the point of view of construction and production, which increases their price.

Another headrest type - with simpler construction - consists of a steel tube with one rounded end, housing the area reinforcement element of the headrest with the resting part of the headrest. The other straight end of the steel tube contains locking elements in the form of cuts designed for setting the required height position of the headrest. The area reinforcement element is usually made of thermo - plastic and the resting part of the headrest is usually made of polyurethane with textile - covered surface. The disadvantage of this solution is the fact that the headrest is adjustable only in vertical direction, depending on the height of the person sitting on the seat - it is not swinging.

According to DE-A-10149455, there is known a headrest that is height adjustable and movable in pre-set positions in limited extent, in the direction of head hit. The problem of the headrest tilting with the purpose of the headrest positioning is not solved.

The problem of the headrest tilting is solved in FR-A-2806678, according to which the core recess houses other elements, adjacent to the arms of the reinforcement, blocking it in turned position. Height adjustment of the headrest in relation to the seat is performed using a mechanism built-in in the seat, the arms of the reinforcement including notches. There is not solved the possibility of height adjustment of the headrest in relation to the reinforcement.

### Technical solution base

The task of the technical solution is to reach construction and technological simplicity and to arrange - under condition of low manufacturing costs - high degree of safety and comfort for the vehicle passengers, which can be reached - to a significant level - by a headrest consisting of the reinforcement, the core, the elastic comfortable part and cover as per the invention, with its base including mainly the fact that the core is placed on the reinforcement in a swinging way, through a recess with locking elements for the reinforcement arms, while the locking elements are created by a shaped profile in at least one wall adjacent to the arm.

From the point of view of height adjustment and the headrest adjustment to the height of the person sitting on the car seat, it seems advantageous for the central bar of the reinforcement to be placed in the core groove, continuing the recess for the reinforcement arms, while the profile of at least one wall of the groove creates shape locking elements.

In consideration of the function it is advantageous for the core to be made of expanded polypropylene.

### List of figures in drawings

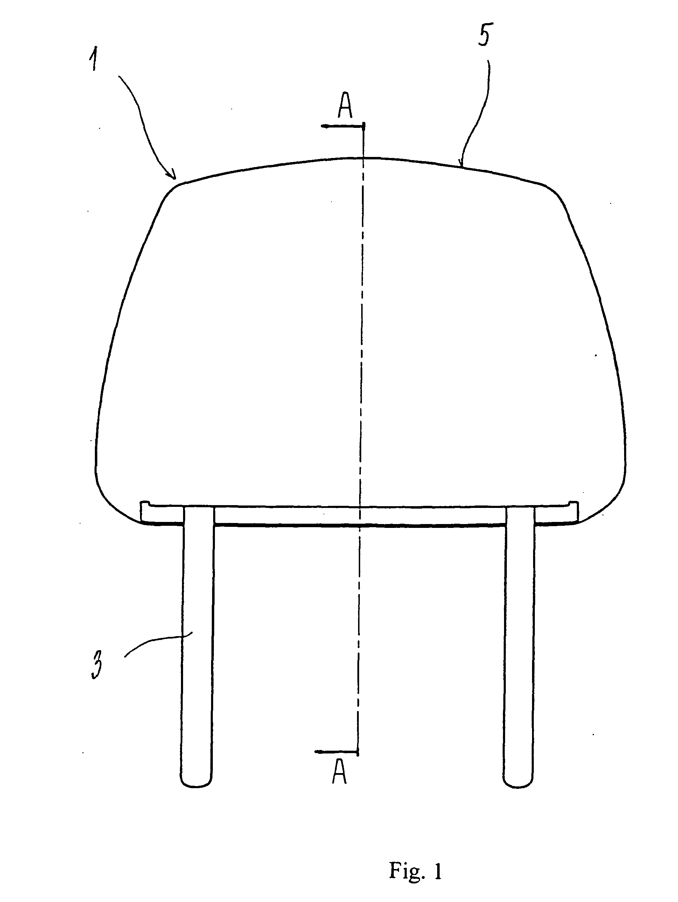

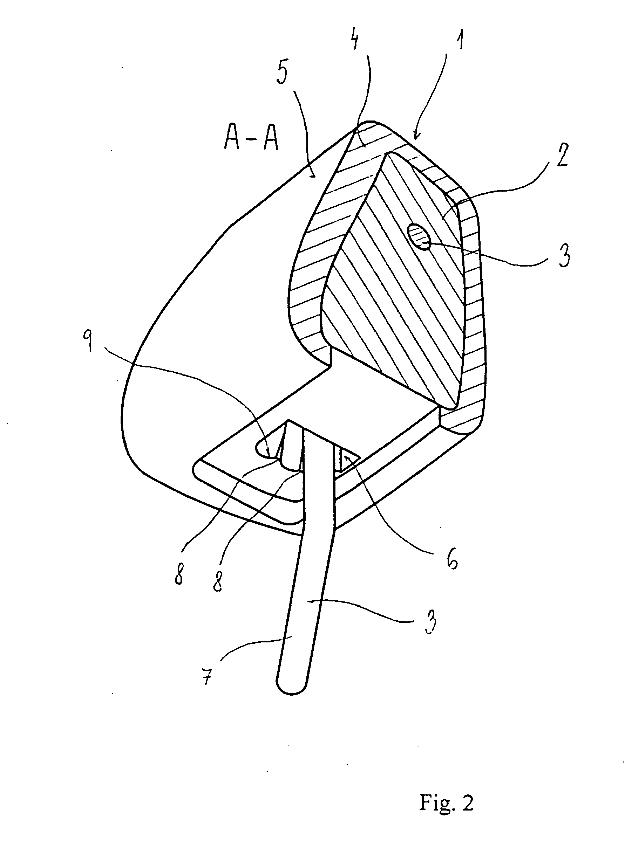

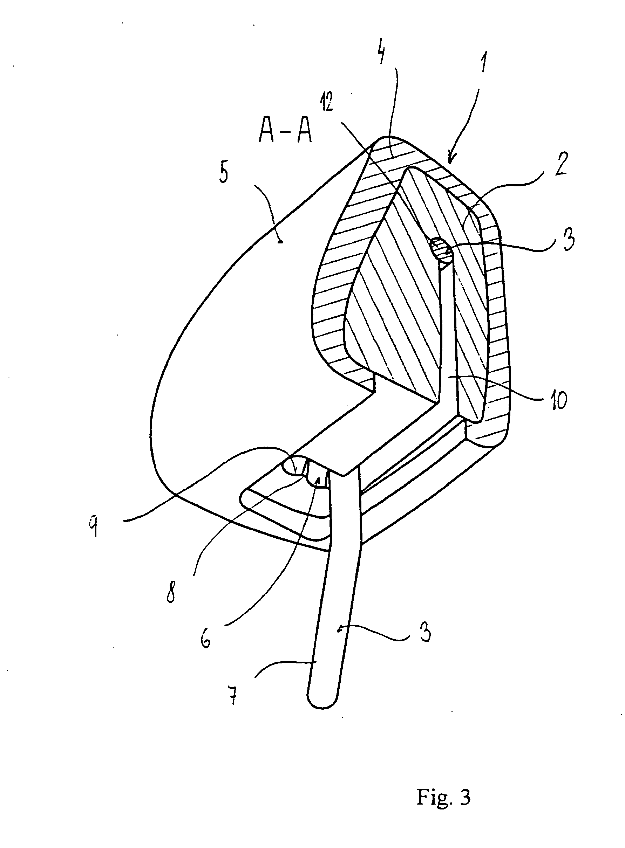

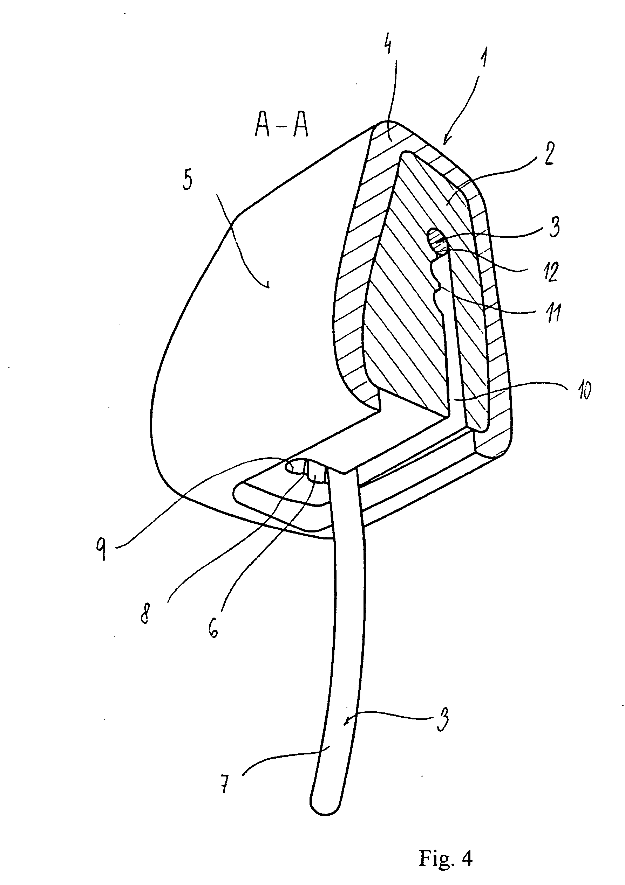

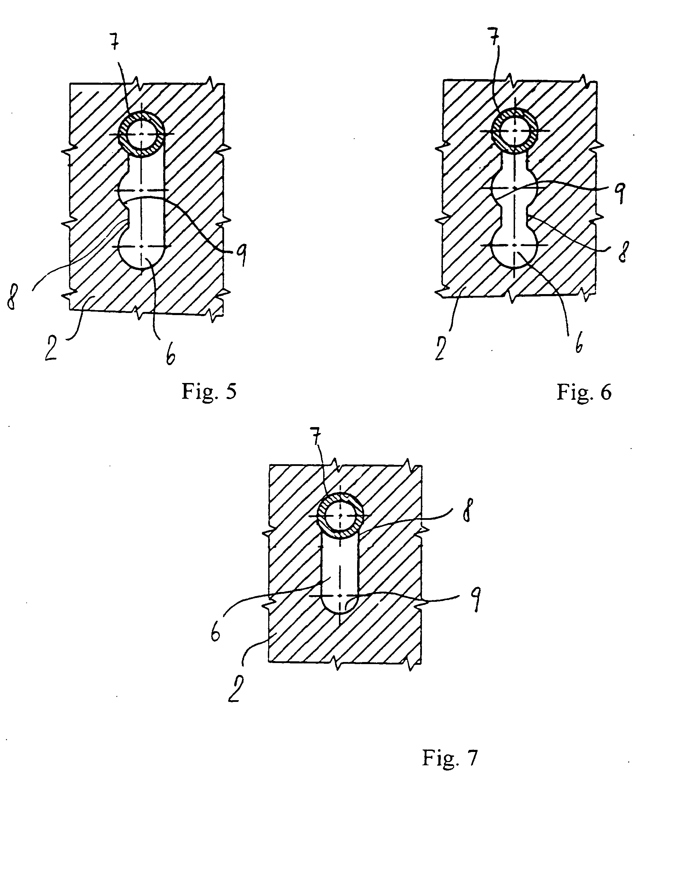

The technical solution will be explained using the drawings, showing in Fig. 1 the view of the headrest, Fig. 2 the headrest section view with foamed core. Fig. 3 the headrest section view with the reinforcement located in a groove, Fig. 4 headrest of an alternative version of the headrest according to Fig. 3 with height locking, Fig. 5 a detail of locking elements in a recess, Fig. 6 and 7 alternative version of locking elements in the recess.

### Description of samples

The headrest 1 according to fig. 1, 2, 3, and 4 consists of the core 2, reinforcement 3, elastic comfortable part 4 surrounding the core 2, and the cover 5. The core 2 is placed in a swinging way on the reinforcement 3. The core 2 contains recesses 6 for arms 7 of the reinforcement 3. The recesses 6 are equipped with locking elements 8 entering the trajectory of the arms 7 of the reinforcement 3 in recesses 6. The elastic comfortable part 4 is made of a soft material, e.g. of polyurethane or polyethylene. The cover 5 of the elastic comfortable part 4 is made of breathable material and so as to guarantee the aesthetic appearance, it is made of leather, respectively a suitable textile type.

In the version of the headrest 1 according to fig. 2 the core 2 is made of strong and simultaneously elastic expanded polypropylene framed simultaneously around the reinforcement 3. The reinforcement 3 of the core 2 of the headrest 1 is in this case placed by the central bar 12 in a swinging and non-detachable way in the core 2. The locking elements 8. according to fig. 5, entering the trajectory of the arms 7 of the reinforcement 3 in recesses 6 consist of a shaped profile 9 in at least one wall of the recess 6. Alternatively, the locking elements 8 may be created by shaped profiles 9 in both of the walls of the recess 6 according to fig. 6.

In the version according to fig. 7 it is possible for the locking elements 8 to consist of a narrowed profile 19 of the recess 6 in relation to the arms 7 of the reinforcement 3, so that the number of possible positions and locking elements 8 is arbitrary, but it is limited only by size and geometry of the headrest 1. The locking elements 8 are created by deformation of the recess 6 wall - by elasticity of the expanded polypropylene.

In case of alternative versions of the headrest 1 according to fig. 3 and 4, the core 2, again made of expanded polypropylene, is connected with the reinforcement 3 by detachable joint. For this purpose, the central bar 12 of the reinforcement 3 is received in the core 2 in groove 10, continuing the recess 6 for the arms 7 of the reinforcement 3. The groove 10 in the core 2 according to Fig. 4 has at least one wall equipped with shaped locking pieces 11 for height setting of the central bar 12 of the reinforcement 3 of the headrest 1 depending on the height of the person sitting on the seat equipped with the headrest 1. Alternatively it is possible to equip the groove 10 with shaped locking elements 11 on both walls of the groove 10 respectively to use smaller profile of the groove 10 in relation to the profile of the central bar 12 of the reinforcement 3 by analogy with recess 6 for arms 7.

In case of movement of the reinforcement 3 in the course of tilting or moving the headrest 1 according to Fig. 2, 3, 4, 5, 6 and 7 the locking elements 8, 11 are gradually depressed, while the shaped locking elements 8, 11 return to their original shapes immediately after re-adjustment of the headrest 1 to a different position. In this way they prevent the headrest 1 from spontaneous re-adjustment.

### Industrial applicability

The headrest may be used for all and any types of transport means equipped with seats provided with a headrest.

## Claims

1. Headrest consisting of a reinforcement (3) comprising two arms (7) and a central bar (12), a core (2), an elastic comfortable part (4) surrounding the core and a cover (5), **characterised by** the fact that the core (2) is placed around the reinforcement (3) in a swinging way through recesses (6) provided with flexible locking elements (8) for the arms (7) of the reinforcement (3), while the locking elements (8) are created by a shaped profile (9) in at least one wall of the recesses (6) adjacent to the arms (7).

2. Headrest according to claim 1, **characterised by** the fact that the reinforcement (3) is placed by its central bar (12) in a groove (10) of the core (2) continuing the recesses (6) for the arms (7) of the reinforcement (3), while the profile of at least one wall of the groove creates shaped locking elements (8).

3. Headrest according to claims 1 and 2, **characterised by** the fact that the core (2) is made of expanded polypropylene.

## Patentansprüche

1. Die Kopfstütze, die aus einer Aussteifung (3), die zwei Arme (7) und eine Zwischenleiste (12) einschließt, einem Kern (2), einem elastischen Komfortteil (4), von welchem der Kern umschlossen wird, und einem Bezug (5) besteht, **dadurch gekennzeichnet, dass** der Kern (2) um die Aussteifung (3) schwenkbar mittels der Aussparung (6) gelagert ist, die mit den elastischen Arretierelementen (8) für die Arme (7) der Aussteifung (3) versehen ist, wobei die Arretierelemente (8) durch ein Formprofil (9) in mindestens einer Wand aus der Aussparung (6) gebildet sind, die an die Arme (7) anliegt.

2. Die Kopfstütze nach dem Anspruch 1, **dadurch gekennzeichnet, dass** die Aussteifung (3) mit ihrer Zwischenleiste (12) in der Nut (10) des Kerns (2) gelagert ist, die an die Aussparung (6) für die Arme (7) der Aussteifung (3) anschließt, wobei die Formarretierelemente (8) durch das Profil mindestens einer Nutwand gebildet sind.

3. Die Kopfstütze nach dem Anspruch 1 und 2, **dadurch gekennzeichnet, dass** ihr Kern (2) aus expandiertem Polypropylen ist.

## Revendications

1. Appui-tête constitué d'un renfort (3) comportant deux bras (7) et une cloison centrale (12), un noyau (2), une partie élastique confortable (4) entourant le noyau et un revêtement (5) **caractérisé en ce que** le noyau (2) est disposé de façon basculante autour du renfort (3) par l'intermédiaire d'un creux (6) pourvu des éléments d'arrêt flexibles (8) destinés aux bras (7) du renfort (3), les éléments d'arrêt (8) étant constitués d'un profilé de forme (9) dans au moins une paroi du creux (6) adjacente aux bras (7).

2. Appui-tête selon la revendication 1 **caractérisé en ce que** le renfort (3) est posé par sa cloison centrale (12) dans une rainure (10) du noyau (2) communiquant au creux (6) destiné au bras (7) du renfort (3) le profilé d'au moins une paroi de la rainure constituant les éléments d'arrêt de forme (8).

3. Appui-tête selon les revendications 1 et 2 **caractérisé en ce que** son noyau (2) est en polypropylène expansé.
